# EUROPEAN PATENT APPLICATION

(11) **EP 4 216 115 A1**
(43) Date of publication of application: **26.07.2023**
(21) Application number: 22152239.4
(22) Date of filing: 19.01.2022
(51) Int. Cl.: G06Q 10/00

(54) **DEVICE WITH RECYCLABLE COMPUTING COMPONENT AND METHOD**

(71) Applicant: Siemens Aktiengesellschaft, 80333 München (DE)
(72) Inventor: Ledentsov, Dmitry, 81549 München (DE)
(74) Representative: Siemens Patent Attorneys

(57) **Abstract**

The present invention relates to a method for computing module recycling, in particular in consumer devices which deteriorate with time. The device comprises a physical, main module (phc) and a computing module (con) which are structurally separable, and the computing module (con) is configured to serve a controlling function for the physical module (phc). The method for recycling computing components comprises the new main module (phc) requests for computing module meeting device specific requirements (cap), after removal of computing module (con) from old main module (phc). Further steps are the synchronization of physical and/or logical contracts and/or specifications of new main module (phc) and computing module (con) by a contract negotiation check (ch) and finally the mount of the computing module (con) to new main module (phc).

## Description

### Technical field:

The present invention relates to a method for computing module recycling, in particular in consumer devices which deteriorate with time. Therefor a corresponding device, comprising at least one recyclable computing module is provided.

### Background:

The world depends on a vast number of devices, such as robots and consumer devices. These often serve a mechanical function. Such consumer device could be an electrical toothbrush with a vibration and/or rotation function or a coffee machine with a heating function and/or a grinder function or a vacuum cleaner robot, with a plurality of mechanical and sensing functions. In any case, these functions mean that the device will wear and deteriorate with time.

Up to date devices are frequently retrofitted with smart components, such as microcontrollers and small computers. These computing components may outweigh the mechanical ones in manufacturing and recycling costs. Recycling of the product may involve destroying a still functioning microcontroller or computer. This is an inefficiency on a planetary scale. With the miniaturization and innovation of electronic components, it is expected that components will need to be upgraded.

Recycling is a complex process though. While large plastic parts may be easily disassembled, electronic components, such as microcontrollers are too small, and may end up being shredded.

### Summary of the invention:

It is therefore a goal of the present invention to provide a method which overcomes the above-mentioned disadvantages. A further goal of the invention is to provide a corresponding device, comprising a recyclable computing module.

This object is solved by the subject matter of the independent claims. Further advantageous features are subject matter of the dependent claims.

Although specific features described in the above summary and the following detailed description are described in connection with specific embodiments and aspects of the present invention, it should be understood that the features of the exemplary embodiments and aspects may be combined with each other, and correlate to each other, unless specifically noted otherwise. Therefore, the above summary is merely intended to give a short overview over some features of some embodiments and implementations and is not to be construed as limiting. Other embodiments may comprise other features than the ones explained above.

A very important aspect of the invention is its contribution to sustainability. Tomorrow's consumer devices would no longer be disposable items.

In accordance with the invention there is provided a device comprising a main module configured to serve at least one physical function, a computing module configured to serve an operating and/or controlling function for the main module, wherein both modules are structurally separable, and the computing module is recyclable, wherein both modules each comprise a storage component configured to store physical and logical contracts and each comprise an I/O-module configured for requesting/obtaining and/or providing specifications, the device further comprising at least one specification validation module, comprising a software component configured to match computing module and main module depending on their specifications.

The computing module could be in other words a computing component, often called smart component, a computer or a microcontroller. The specification validation module can be a software component that is running on the computing module. The specification validation module can be a computing component, for example if it is added or integrated to the main module. For example, a RFID-chip could be used. Specification validation modules can be available on both, main module and computing module.

Preferably, the cross-validation is done in a specification validation module on the computing module.

An important advantage of the device with structurally separable modules according to the present invention is the easier disassembly after main modules lifetime.

The present disclosure further describes an embodiment of the invention, wherein the specification is stored as logical contract in the specification validation module of the device, particularly, the specification is stored in a catalogue and is obtained by the I/O-module. A catalogue in the context of this application can be an online catalogue or even offline.

In another preferred embodiment of the invention, the device as previously described comprises a specification validation module, which provides at least an output component serving as compatibility indicator. This indicator can give an electronic, acoustic or optical signal to the user, indicating a match and/or mismatch as precaution.

The present disclosure further describes an embodiment of the invention, wherein the physical function of the main module is a mechanical function, electrical function, especially lighting function or temperature function. In the context of this application, a physical function could for example be a mechanical function, e.g. in robotics or ventilators, an electrical function, e.g. an electrical lighting functions like LEDs or a temperature function, e.g. heating function in dryers, heaters or coffee machines. All these functions have in common to cause altering of the device, in particular an altering of the main module.

Correspondingly the computing module of the device according to one of the previously described embodiments, provides an operating and/or controlling function that comprises speed control, force control, pressure control, vibrational movement control, rotational movement control, on-off-switch and/or temperature control.

In a preferred embodiment of the invention, the device comprises one specification validation module that is integrated in the computing module. The essential idea of the present invention is to minimize smart components that are irreversibly bound to altering parts. It is even possible in an embodiment of the invention, that the main module or hardware module respectively, comprises the, or at least one of the specification validation modules, which is separable from the device too.

The method for recycling computing components according to the present invention is characterized by the step(s) of removing computing module from old main module, a new main module requesting for a computing module that meets device specific requirements, cross-validating physical and/or logical contracts and/or specifications of the new main module and the removed computing module by a contract negotiation check, mounting the computing module to the new main module if check is positive.

For example, the main module can request for timer components, the computing module can request or provide supply fit data and the computing module can request hardware concerning data like mechanical capabilities, on which the software can act.

Cross-validating physical and/or logical contracts and/or specifications of the new main module and the removed computing module by a contract negotiation check in the context of the application means that there is a check or validation, whether there is a match, considering both sides. But there is no synchronization, that would include amendments of the contract data. After cross-validation, the contracts are checked.

In a preferred embodiment of the invention, the method comprises the provision of computing modules in a catalogue. The method can comprise the request of a potential new computing module concerning capabilities of the hardware module, the main module. The main benefit is matching renewed or recycled hardware components to continued existing computing modules.

In particular, the method according to the invention comprises the steps of maintaining and/or recycling a computing module by adapting or renewing the software configuration to serve different and /or more operating and/or controlling functions for a main module.

### Definitions:

As used herein, the term computing system refers, for example, to a device, apparatus or a plant. A computing system can, for example, be a field device. Preferably, the computing system comprises a plurality of hardware components and/or software components. Furthermore, the computing system can, for example, comprise at least one component having a communication interface configured to connect the inventive apparatus to an environment, user and/or other system.

Unless specifically stated otherwise, it is appreciated that throughout the specification discussions utilizing terms such as "processing", "computing", "computer-based", "calculating", "determining", "generating", "configuring" or the like, refer to the action and/or processes of a computer that manipulates and/or transforms data into other data, said data represented as physical, e.g. such as electronic, quantities. The term computing device should be expansively construed to cover any kind of electronic device with data processing capabilities, including, by way of non-limiting example, personal computers, servers, handheld computer systems, Pocket PC devices, Cellular communication device and other communication devices with computing capabilities, processors and other electronic computing devices.

With the terms components or modules, here and in the following, may for example be software modules of a computer program for carrying out software. Alternatively, the modules may correspond to respective hardware modules with software for carrying out the respective method steps stored on them.

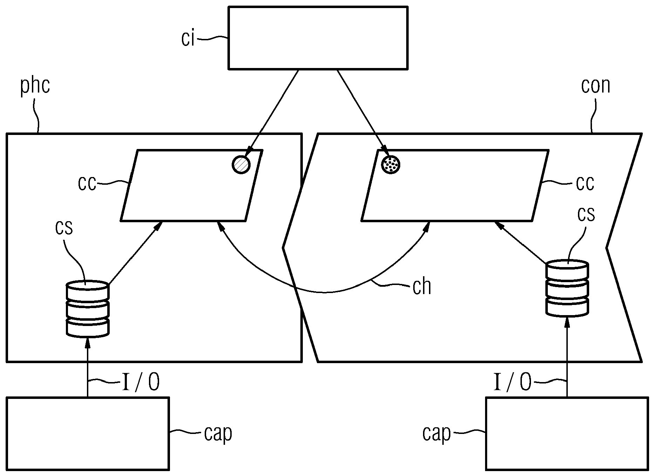

### Brief description of the drawing:

The above and other elements, features, steps, and characteristics of the present disclosure will be more apparent from the following detailed description of embodiments with reference to the figure, that illustrates a schematic drawing of a device according to embodiments of the invention, with focus on the requirements for matching computing module (con) and main module (phc) depending on their specifications (cap).

It should be noted that the use of "a" or "an" throughout this application does not exclude a plurality, and "comprising" does not exclude other steps or elements. Also, elements described in association with different embodiments may be combined. It should also be noted that reference signs in the claims and in the description should not be construed as limiting the scope of the claims.

### Detailed description of embodiments:

The figure illustrates a schematic drawing of a device with a modular architecture. The device at least containing one smart component (con), that is assumed to be more expensive throughout their lifecycle. The device comprises a main component (phc) with a physical function.

The device comprises a system for specifying the physical and logical contracts that are stored (cs) on the smart module (con) as well as on the physical component (phc). This system for specifying the physical and logical contracts could be a contract checker (cc) in the shape of a microcontroller or in the shape of a further software component integrated to the smart module (con), to the main module (phc) or there are even two contract checkers (cc) each on one of the modules. The contract checker (cc) provides a compatibility indicator (ci). The method step of contract negotiation (ch) is based on the data stored in a storage module (cs) on each device component (phc, con) concerning capability requirements and provisions (cap).

The method constitutes a blueprint for an ecosystem for designing, selling, exchanging, maintaining, and recycling modules apart from the devices.

The invention allows for a more cost-wise and environmentally efficient recycling than what's currently common in devices. The invention enables a market of reusable hardware components in devices that are traditionally recycled or upgraded in whole. The routine repair of everyday products thus gets easier, more systematic, more cost-efficient and more sustainable.

### Reference signs:

- ci: compatibility indicators (hatched, dotted)
- cc: contract checker, optional, at least one per device
- ch: check
- phc: physical component
- con: computing module
- cs: contract storage
- cap: capabilities

## Claims

1. Device comprising
a main module (phc) configured to serve at least one physical function,
a computing module (con) configured to serve an operating and/or controlling function for the main module (phc), wherein both modules (phc, con) are structurally separable, and the the computing module (con) is recycleable,
wherein both modules (phc, con) each comprise a storage component (cs) configured to store physical and logical contracts and each comprise an I/O-module configured for requesting/obtaining and/or providing specifications (cap), the device further comprising at least one specification validation module (cc), comprising a software component configured to match computing module (con) and main module (phc) depending on their specifications (cap).

2. Device according to claim 1, wherein the specification (cap) is stored as logical contract in the specification validation module (cc).

3. Device according to claim 1 or 2, wherein the specification (cap) is stored in a catalogue and is obtained by the I/O-module.

4. Device according to one of the previously described claims, wherein the one specification validation module (cc) provides at least an output component serving as compatibility indicator (ci).

5. Device according to one of the previously described claims, wherein the physical function is a mechanical function, electrical function, especially lighting function or temperature function.

6. Device according to one of the previously described claims, wherein the operating and/or controlling function comprises speed control, force control, pressure control, vibrational movement control, rotational movement control, on-off-switch and/or temperature control.

7. Device according to one of the previously described claims, wherein one specification validation module (cc) is integrated in the computing module (con).

8. Method for recycling computing components for use in devices according to one of claims 1 to 7, comprising:
Remove computing module (con) from old main module (phc),
New main module (phc) requests for computing module meeting device specific requirements (cap),
Cross-validate physical and/or logical contracts and/or specifications of new main module (phc) and computing module (con) by a contract negotiation check (ch),
Mount computing module (con) to new main module (phc).

9. Method according to claim 8, further comprising:
Provision of computing modules in a catalogue.

10. Method according to claim 8 or 9, further comprising maintaining and recycling computing modules (con) by adapting the software configuration to serve different and /or more operating and/or controlling functions for a main module (phc).
